Europäisches Patentamt

European Patent Office

Office européen des brevets

(11) Veröffentlichungsnummer : **0 413 897 B1**

(12) **EUROPÄISCHE PATENTSCHRIFT**

(45) Veröffentlichungstag der Patentschrift :
**01.07.92 Patentblatt 92/27**

(21) Anmeldenummer : **90106694.4**

(22) Anmeldetag : **06.04.90**

(51) Int. Cl.⁵ : **B65G 39/09**, F16C 29/00

(54) **Förderkugeleinheit.**

(30) Priorität : **21.08.89 DE 3927560**

(43) Veröffentlichungstag der Anmeldung :
**27.02.91 Patentblatt 91/09**

(45) Bekanntmachung des Hinweises auf die
Patenterteilung :
**01.07.92 Patentblatt 92/27**

(84) Benannte Vertragsstaaten :
**DE FR GB**

(56) Entgegenhaltungen :
**EP-A- 0 162 484**
**EP-A- 0 223 079**
**EP-A- 0 300 128**
**DE-A- 3 805 494**
**GB-A- 2 172 062**

(73) Patentinhaber : **BAVARIA CARGO**
**TECHNOLOGIE GMBH**
**Kirschstrasse 20**
**W-8000 München 50 (DE)**

(72) Erfinder : **Huber, Thomas**
**Schechen 2a**
**W-8127 Iffeldorf (DE)**

(74) Vertreter : **Strasser, Wolfgang, Dipl.-Phys et al**
**Patentanwälte Strohschänk, Uri & Strasser**
**Innere Wiener Strasse 8**
**W-8000 München 80 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Förderkugeleinheit zum Einbau in eine Sockelöffnung in einem Förderbahnpaneel, mit einer auf einer Vielzahl von Lagerkugeln in einer Lagerschale drehbar gelagerten, nach oben aus der Förderkugeleinheit herausragenden Förderkugel und einer die Förderkugel ringförmig von oben umgreifenden, die Förderkugel und die Lagerkugeln in der Lagerschale sichernden Kugelführung, welche an ihrem Umfangsrand mit wenigstens zwei Verriegelungselementen versehen ist, die jeweils mit einer Verriegelungsschulter im zusammengebauten Zustand unter einen Umfangsflansch der Lagerschale sichernd eingreifen. Derartige Förderkugeleinheiten werden beispielsweise in Kugelförderbahnen verwendet, die z.B. im Frachtraum von Frachtflugzeugen zum Bewegen von Frachtbehältern beim Beladen oder Entladen vorgesehen sind. An diese Förderkugeleinheiten werden dabei insbesondere die Forderungen gestellt, daß sie wartungsfrei und sehr robust sind und dennoch ein geringes Gewicht besitzen.

Eine Förderkugeleinheit der eingangs genannten Gattung ist in der am 31 August 1989 veröffentlichten DE-A-3 805 494 beschrieben. Derartige Förderkugeleinheiten gehören auch gemäß Art. 54 (3) EPÜ zum Stand der Technik, da sie in EP-A-329 816, die der DE-A- 3 805 494 entspricht, beschrieben sind. Bei diesen Förderkugeleinheiten ist die auf einer Vielzahl von Lagerkugeln drehbar gelagerte Förderkugel mit einer etwa halbkugeligen Lagerschale und einer damit verbundenen, die Förderkugel auf den Lagerkugeln haltende Kugelführung zu einer Lagereinheit zusammengefaßt, die in einem etwa hohlzylindrischen Gehäuse entlang der Mittelachse dieses Gehäuses bewegbar ist. Das Gehäuse selbst ist lösbar in dem Paneel einer Förderbahn festgelegt. Zwischen im unteren Teil des Gehäuses angeordneten Rippen und der Unterseite der Lagerschale ist ein Tellerfederpaket angeordnet, welches die Lagereinheit im unbelasteten Zustand der Förderkugel nach oben gegen eine Anschlagschulter im Gehäuse vorspannt, so daß die Förderkugel durch eine zentrale Öffnung in der Kugelführung nach oben über die Oberfläche des Paneels der Förderbahn hinausragt. Bei Belastung durch einen Frachtbehälter kann die Förderkugel zusammen mit der gesamten Lageranordnung entgegen der Kraft des Tellerfederpakets in das Gehäuse hinein nach unten eingefedert werden, bis der Federweg des Tellerfederpakets erschöpft ist.

Im allgemeinen ist zwar die federnde Ausgestaltung der Förderkugeleinheit wegen der harten Anforderungen im Frachtladebetrieb sehr zweckmäßig, doch gibt es in der Praxis eine Reihe von Anwendungsfällen, in denen auf die federnde Ausgestaltung verzichtet werden kann und stattdessen überwiegend auf geringstes Gewicht der Förderkugeleinheit Wert gelegt wird.

Die der Erfindung zugrundeliegende Aufgabe besteht somit darin, eine Förderkugeleinheit der eingangs genannten Gattung zu schaffen, die sich durch einfachen robusten Aufbau und geringes Gewicht auszeichnet.

Gemäß der Erfindung wird diese Aufgabe dadurch gelöst, daß im eingebauten Zustand der Umfangsflansch der Lagerschale am Umfangsrand der Sockelöffnung des Förderbahnpaneels abgestützt ist, und daß die Verriegelungsschultern der Verriegelungselemente mit ihren freien äußeren Enden unter den Umfangsrand der Sockelöffnungen sichernd eingreifen.

Bei dieser erfindungsgemäßen Ausgestaltung ist also vorgesehen, daß die im allgemeinen aus Metall geformte Lagerschale selbst unmittelbar und ohne weitere Montage- oder Gehäuseteile am Förderbahnpaneel abgestützt ist. Vor allem zeichnet sich die erfindungsgemäße Förderkugeleinheit aber dadurch aus, daß die Verriegelungselemente an der Kugelführung eine Doppelfunktion ausüben: Einerseits dienen nämlich die Verriegelungsschultern dazu, die Lagerschale, die Lagerkugeln, die Förderkugel und die Kugelführung zusammenzuhalten, und andererseits erfüllen sie auch die Funktion, die derart zusammengehaltene Förderkugeleinheit in der Sockelöffnung des Förderbahnpaneels festzuhalten, da im eingebauten Zustand die Verriegelungsschulter auch unter den Rand der Sockelöffnung greift und dadurch die Förderkugeleinheit sichert.

Bei dieser Ausgestaltung ergibt sich somit ein Minimum an Einzelteilen, so daß nicht nur die Forderung nach geringstem Gewicht erfüllt werden kann, sondern wegen des einfachen Aufbaus auch hohe Zuverlässigkeit im Einsatz und eine kostengünstige Herstellung gewährleistet sind.

Bei einer besonders bevorzugten Ausgestaltung der Erfindung ist vorgesehen, daß die Verriegelungselemente jeweils einen nach oben offen U-förmigen, elastischen Federteil umfassen, dessen einer vertikaler Schenkel fest mit der Kugelführung verbunden ist, während sein anderer, der Förderkugel abgewandter vertikaler Schenkel bezüglich der Vertikalen elastisch verkippbar ist und im Abstand zu seinem freien oberen Ende die von der Förderkugel weg nach außen ragende Verriegelungsschulter trägt.

Besonders vorteilhaft ist eine Ausführung, bei der die Verriegelungselemente einstückig mit der Kugelführung geformt sind. In diesem Fall können die Kugelführung und die Verriegelungselemente beispielsweise als Kunststoff-Formteil ausgebildet sein, so daß die Forderung nach geringem Gewicht berücksichtigt wird.

Bevorzugt ist vorgesehen, daß die Verriegelungselemente im zusammengebauten Zustand der Förderkugeleinheit durch Ausschnitte in der Lagerschale nach unten ragen und dabei jeweils mit ihrer Verriegelungsschulter unter einen, den oberen Rand der Ausschnitte bildenden Steg der Lagerschale greifen, wobei jede Verriegelungsschulter von der Förderkugel weg nach außen über den Steg hinausragt und unter den Umfangsrand der Sockelöffnung des Förderbahnpaneels greift.

Besonders vorteilhaft ist eine Ausführung, bei der der äußere vertikale Schenkel der Verriegelungselemente elastisch derart weit zur Förderkugel hin auslenkbar ist, daß die Verriegelungsschulter wahlweise nur unter dem Umfangsrand der Sockelöffnung heraustritt oder auch den Steg der Lagerschale freigibt. Wenn bei dieser Ausführungsform das freie Ende des äußeren vertikalen Schenkels zunächst geringfügig zur Förderkugel hin elastisch ausgelenkt wird, tritt die Verriegelungsschulter unter dem Umfangsrand der Sockelöffnung heraus, so daß die Förderkugeleinheit aus dem Förderbahnpaneel nach oben herausgenommen werden kann. In diesem Zustand befindet sich jedoch die Verriegelungsschulter noch immer sichernd unter dem Steg der Lagerschale, so daß die Förderkugeleinheit immer noch als Einheit zusammengehalten ist. Erst beim weiteren Auslenken des äußeren vertikalen Schenkels zur Förderkugel hin bewegt sich die Verriegelungsschulter auch unter dem Steg heraus, so daß die Kugelführung nach oben von der Lagerschale abgehoben werden kann. Dies ist natürlich nur zweckmäßig, wenn die Förderkugeleinheit zerlegt werden soll, beispielsweise um Einzelteile auszutauschen oder zur Reinigung.

Die Erfindung wird im folgerden beispielsweise unter Bezugnahme auf die Zeichnung näher erläutert; es zeigt:

Fig. 1 eine perspektivische Darstellung der zusammengebauten Förderkugeleinheit;

Fig. 2 eine Draufsicht auf die Förderkugeleinheit der Fig. 1;

Fig. 3 eine Seitenansicht der Förderkugeleinheit gesehen von unten her in der Fig. 2 der Zeichnung;

Fig. 4 eine weitere Seitenansicht der Förderkugeleinheit, gesehen von links in der Fig. 2 der Zeichnung;

Fig. 5 eine perspektivische Ansicht der Lagerschale;

Fig. 6 eine perspektivische Ansicht der Kugelführung;

Fig. 7 eine perspektivische Darstellung eines Abschnitts eines Förderbahnpaneels mit der darin vorgesehenen Sockelöffnung;

Fig. 8 einen Vertikalschnitt der zusammengebauten Förderkugeleinheit entlang der Linie A-A der Fig. 2;

Fig. 9 einen Vertikalschnitt der Förderkugeleinheit entlang der Linie B-B der Fig. 2;

Fig. 10 einen Vertikalschnitt der Förderkugeleinheit entlang der Linie C-C der Fig. 2;

Fig. 11 einen der Fig. 8 entsprechenden Vertikalschnitt der Förderkugeleinheit, wobei die Verriegelungselemente zum Herausnehmen der Förderkugeleinheit aus dem Förderbahnpaneel teilweise gelöst sind; und

Fig. 12 eine der Fig. 11 entsprechende Darstellung, wobei jedoch die Verriegelungselemente vollständig eingefedert sind, so daß die Kugelführung nach oben aus der Lagerschale herausnehmbar ist.

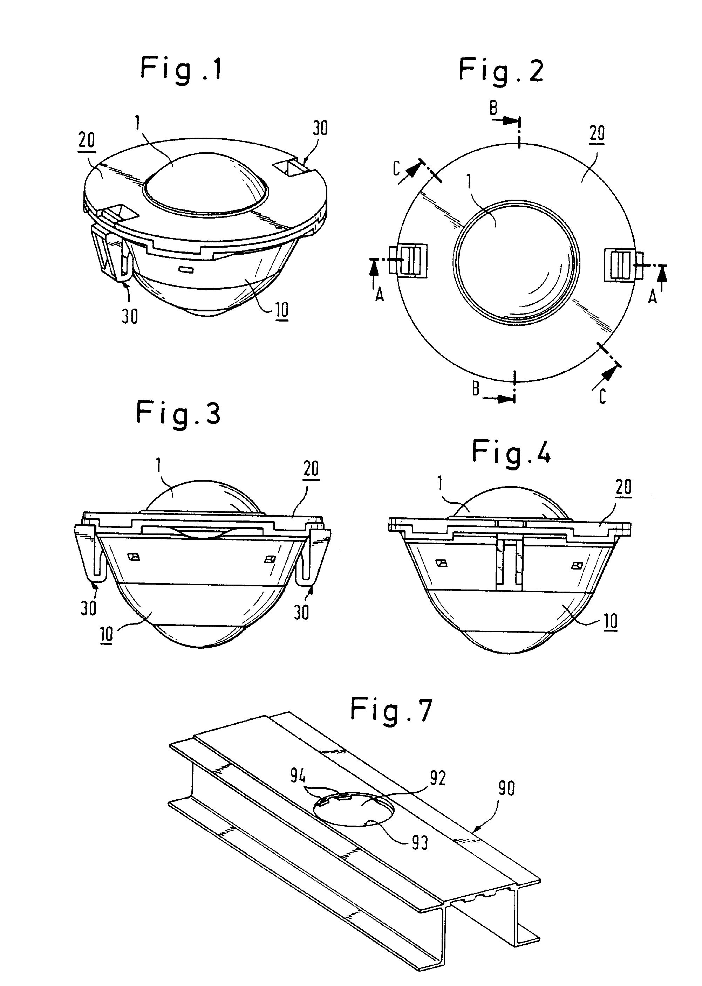

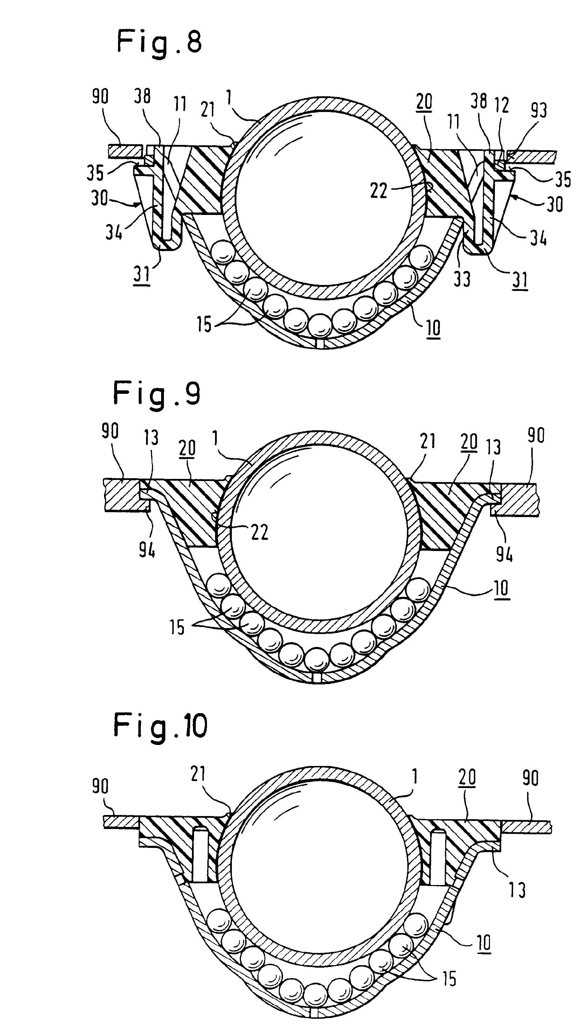

Wie insbesondere in den Fig. 1 bis 4 und 8 bis 10 dargestellt, weist die Förderkugeleinheit eine etwa halbkugelige Lagerschale 10 auf (Fig. 5), in der eine Vielzahl von Lagerkugeln 15 in einer die Innenfläche der Lagerschale 10 bedeckenden Schicht nebeneinanderliegender Kugeln angeordnet ist. Auf diesen Lagerkugeln 15 ist eine Förderkugel 1 drehbar gelagert. Die Förderkugel 1 ist von oben her von einer in etwa ringförmigen Kugelführung 20 (Fig. 6) umgeben, durch deren zentrische Öffnung 22 der obere Teil der Förderkugel 1 nach oben über die Oberfläche eines Förderpaneels 90 hinausragt, wie in den Fig. 8 bis 10 dargestellt.

Am oberen Rand der zentralen Öffnung 22 der Kugelführung 20 ist eine Dichtlippe 21 angeformt, die abdichtend gleitend an der Förderkugel 1 anliegt. Der übrige Teil der Öffnung 22 ist mit Spiel bezüglich der Förderkugel 1 ausgebildet.

Wie am besten in den Fig. 8 bis 10 zu sehen ist, ist die Lagerschale 10 keine präzise Halbkugel sondern derart mit verschiedenen Krümmungsradien geformt, daß die Förderkugel 1 nur in einem ringförmigen Bereich auf den Lagerkugeln 15 aufsitzt.

Wie am besten in der Fig. 5 zu sehen ist, ist der obere Rand der Lagerschale 10 mit auf Kreissehnen im Abstand zur Mittelachse verlaufenden Rinnen 14 geformt, die den Sockelöffnungen 92 des in der Fig. 7 gezeigten Förderbahnpaneels 90 angepaßt sind und die dazu dienen, die Förderkugeleinheit im montierten Zustand im Förderbahnpaneel 90 gegen Verdrehen zu sichern.

Ferner ist die Lagerschale 10 an ihrem oberen Umfang mit einem etwa horizontalen Umfangsflansch 13 geformt, der zur Abstützung an den entsprechenden Sockelsegmenten 94 der Sockelöffnung 92 des Förderbahnpaneels 90 dient.

Schließlich ist die Lagerschale 10 noch mit zwei diametral gegenüberliegenden rechteckigen Ausschnitten 11 nahe des oberen Umfangsrandes versehen. Die oberen Kanten dieser rechteckigen Ausschnitte 11 sind jeweils durch einen Steg 12 begrenzt, der Bestandteil des Umfangsflansches 13 der Lagerschale 10 ist.

Wie insbesondere in den Fig. 6 und 8 gezeigt, ist die Kugelführung an zwei diametral gegenüberliegenden Bereichen jeweils mit einem Verriegelungselement 30 versehen. Jedes dieser Verriegelungselemente 30 umfaßt einen nach oben offenen U-förmigen Federteil 31, dessen innerer vertikaler Schenkel 33 einstückig mit der übrigen Kugelführung 20 verbunden ist. Der in geringem Abstand zum inneren Schenkel 33 nach oben verlaufende äußere vertikale Schenkel 34 trägt nahe seines oberen freien Endes 38 eine radial nach außen ragende Verriegelungsschulter 35. Der Abstand des äußeren Schenkels 34 vom inneren Schenkel 33 ist derart gewählt, daß sich der elastisch auslenkbare äußere Schenkel 34 bei Druck auf sein freies Ende 38 so weit zum Zentrum der Kugelführung 20 hin bewegen kann, daß sich die Verriegelungsschulter 35 zumindest um das Maß ihrer radialen Breite (gesehen bezüglich des Mittelpunkts der Kugelführung 20) einwärts bewegen kann.

Vorzugsweise ist die Kugelführung 20 zusammen mit den Verriegelungselementen 30 einstückig als Formteil aus federelastischem Kunststoff hergestellt, während die Lagerschale 10, die Lagerkugeln 15 und auch die Förderkugel 1 gewöhnlich aus Metall geformt sind.

Wie insbesondere in der Fig. 8 gezeigt ist, greifen die U-förmigen Federteile 31 der Verriegelungselemente 30 im zusammengebauten Zustand der Förderkugeleinheit nach unten durch die rechteckigen Ausschnitte 11 in der Lagerschale 10, wobei insbesondere die Verriegelungsschultern 35 jedes Verriegelungselements 30 unter den Steg 12 des jeweiligen Ausschnittes 11 eingreift, so daß die Förderkugeleinheit aus Förderkugel 1, Lagerschale 10, den Lagerkugeln 15 und der Kugelführung 20 als Einheit zusammengehalten ist.

Die Verriegelungsschultern 35 sind jedoch mit einer derartigen radialen Breite ausgestattet, daß sie nach außen unter dem jeweiligen Steg 12 hinausragen und unter den Umfangsrand 93 der zugehörigen Sockelöffnung 92 eines Förderbahnpaneels 90 eingreifen.

In diesem Zustand ist also die Förderkugeleinheit nach unten zu durch die Sockelsegmente 94 (siehe Fig. 7 und 9) gehalten, während sie durch die äußeren Enden der Verriegelungsschultern 35 gegen die Unterseite des Umfangsrandes 93 der Sockelöffnung 92 des Förderbahnpaneels 90 abgestützt ist und dadurch sich nach oben nicht herausbewegen kann.

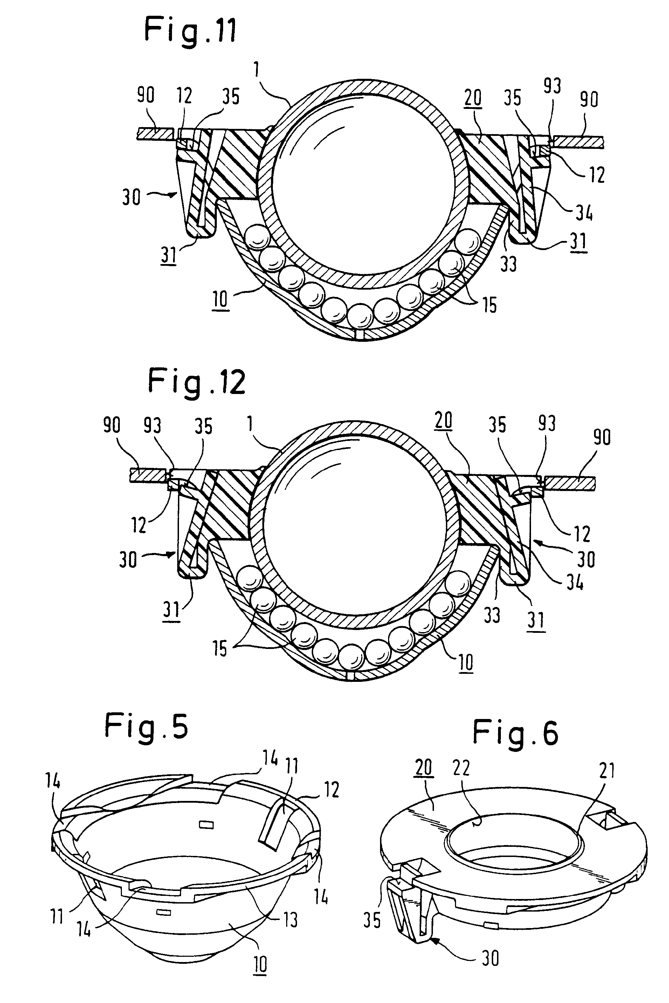

Zum Herausnehmen der Förderkugeleinheit aus dem Förderbahnpaneel 90 wird mit einem geeigneten Werkzeug auf die freien Enden 38 der Verriegelungselemente 30 jeweils eine zur Förderkugel 1 hin wirkende Kraft ausgeübt, bis die äußeren vertikalen Schenkel 34 so weit zur Förderkugel 1 hin eingefedert sind, daß die jeweilige Verriegelungsschulter 35 unter dem Umfangsrand 93 des Förderbahnpaneels 90 hervortritt. Dieser in der Fig. 11 dargestellte Zustand gestattet es, daß die Förderkugeleinheit nach oben aus der Sockelöffnung 92 herausgenommen wird. Dennoch ist in diesem Zustand der sichere Zusammenhalt der Förderkugeleinheit gewährleistet, da die Verriegelungsschulter 35 immer noch unter den Steg 12 der Lagerschale 10 eingreift.

Wenn die Förderkugeleinheit auseinandergenommen werden soll, werden die freien Enden 38 der äußeren vertikalen Schenkel 34 noch weiter elastisch zur Förderkugel 1 hingebogen, bis die äußeren Enden der Verriegelungsschultern 35 unter den Stegen 12 hervortreten, so daß die Kugelführung 20 nach oben aus der Lagerschale 10 herausgehoben werden kann. Dieser Zustand ist in der Fig. 12 dargestellt.

Selbstverständlich wird der in der Fig. 12 gezeigte Verformungszustand der Verriegelungselemente 30 auch zum Zusammenbau der Förderkugeleinheit genutzt.

Die beschriebenen Verriegelungselemente 30 sind also mit der Doppelfunktion der Verriegelung der Kugelführung 20 an der Lagerschale 10 einerseits und der Verriegelung der gesamten Förderkugeleinheit in der Sockelöffnung 92 eines Förderbahnpaneels 90 ausgestattet.

## Patentansprüche

1. Förderkugeleinheit zum Einbau in eine Sockelöffnung (92) in einem Förderbahnpaneel (90), mit einer auf einer Vielzahl von Lagerkugeln (15) in einer Lagerschale (10) drehbar gelagerten, nach oben aus der Förderkugeleinheit herausragenden Förderkugel (1) und einer die Förderkugel (1) ringförmig von oben umgreifenden, die Förderkugel (1) und die Lagerkugeln (15) in der Lagerschale (10) sichernden Kugelführung (20), welche an ihrem Umfangsrand mit wenigstens zwei Verriegelungselementen (30) versehen ist, die jeweils mit einer Verriegelungsschulter (35) im zusammengebauten Zustand unter einen Umfangsflansch (13) der Lagerschale (10) sichernd eingreifen, wobei im eingebauten Zustand der Umfangsflansch (13) der Lagerschale (10) am Umfangsrand (93) der Sockelöffnung (92) des Förderbahnpaneels (90) abgestützt ist und wobei die Verriegelungsschultern (35) der Verriegelungselemente (30) mit ihren freien äußeren Enden unter den Umfangsrand (93) der Sockelöffnungen (92) sichernd eingreifen.

2. Förderkugeleinheit nach Anspruch 1, dadurch **gekennzeichnet,** daß die Verriegelungselemente (30) jeweils einen nach oben offenen U-förmigen, elastischen Federteil (31) umfassen, dessen einer vertikaler Schenkel (33) fest mit der Kugelführung (20) verbunden ist, während sein anderer, der Förderkugel (1) abgewandter vertikaler Schenkel (34) bezüglich der Vertikalen elastisch verschwenkbar ist und im Abstand zu seinem freien oberen Ende die von der Förderkugel (1) weg nach außen ragende Verriegelungsschulter (35) trägt.

**4**

3. Förderkugeleinheit nach Anspruch 2, dadurch **gekennzeichnet,** daß die Verriegelungselemente (30) einstückig mit der Kugelführung (20) geformt sind.

4. Förderkugeleinheit nach einem der vorhergehenden Ansprüche, dadurch **gekennzeichnet,** daß die Verriegelungselemente (30) im zusammengebauten Zustand der Förderkugeleinheit durch Ausschnitte (11) in der Lagerschale (10) nach unten ragen und dabei jeweils mit ihrer Verriegelungsschulter (35) unter einen, den oberen Rand der Ausschnitte (11) bildenden Steg (12) der Lagerschale (10) greifen, wobei jede Verriegelungsschulter (35) von der Förderkugel (1) weg nach außen über den Steg (12) hinausragt und unter den Umfangsrand (93) der Sockelöffnung (92) des Förderbahnpaneels (90) greift.

5. Förderkugeleinheit nach einem der Ansprüche 2 bis 4, dadurch **gekennzeichnet,** daß der äußere vertikale Schenkel (34) der Verriegelungselemente (30) elastisch derart weit zur Förderkugel (1) hin auslenkbar ist, daß die Verriegelungsschulter (35) wahlweise nur unter dem Umfangsrand (93) der Sockelöffnung (92) heraustritt oder auch den Steg (12) der Lagerschale (10) freigibt.

## Claims

1. A conveyor ball unit for installation in a mounting opening (92) in a conveyor track panel (90), comprising a conveyor ball (1) which is rotatably mounted on a plurality of mounting balls (15) in a mounting shell (10) and which projects upwardly out of the conveyor ball unit, and a ball guide means (20) which embraces the conveyor ball (1) from above in an annular configuration and which secures the conveyor ball (1) and the mounting balls (15) in the mounting shell (10) and which at its peripheral edge is provided with at least two locking elements (30) which in the assembled condition each securingly engage with a locking shoulder (35) under a peripheral flange (13) on the mounting shell (10) wherein in the installed condition the peripheral flange (13) of the mounting shell (10) is supported against the peripheral edge (93) of the mounting opening (92) in the conveyor track panel (90) and wherein the locking shoulders (35) of the locking elements (30) securingly engage with their free outer ends under the peripheral edge (93) of the mounting openings (92).

2. A conveyor belt unit according to claim 1 characterised in that the locking elements (30) each include an upwardly open U-shaped resilient spring portion (31) having a vertical limb (33) which is fixedly connected to the ball guide means (20) while its other vertical limb (34) which is remote from the conveyor ball (1) is elastically pivotable with respect to the vertical and at a spacing from its free upper end carries the locking shoulder (35) which projects outwardly away from the conveyor ball (1).

3. A conveyor ball unit according to claim 2 characterised in that the locking elements (30) are formed integrally with the ball guide means (20).

4. A conveyor ball unit according to one of the preceding claims characterised in that in the assembled condition of the conveyor ball unit the locking elements (30) project downwardly through openings (11) in the mounting shell (10) and in so doing engage with their respective locking shoulder (35) under a flange portion (12) of the mounting shell (10), which forms the upper edge of the openings (11), wherein each locking shoulder (35) projects outwardly away from the conveyor ball (1) beyond the flange portion (12) and engages under the peripheral edge (93) of the mounting opening (92) in the conveyor track panel (90).

5. A conveyor ball unit according to one of claims 2 to 4 characterised in that the outer vertical limb (34) of the locking elements (30) can be resiliently deflected towards the conveyor ball (1) to such an extent that the locking shoulder (35) selectively only comes out from under the peripheral edge (93) of the mounting opening (92) or also releases the flange portion (12) of the mounting shell (10).

## Revendications

1. Unité à bille de transport destinée à être incorporée dans une ouverture de semelle (92) dans un panneau de voie de transport (90), comportant une bille de transport (1) gui est logée pouvant être tournée sur un grand nombre de billes de palier (15) dans une coquille de palier (10), et qui fait saillie vers le haut, hors de l'unité à bille de transport, et comportant un élément de guidage de bille (20) qui enveloppe de manière annulaire et par le haut la bille de transport (1), gui assure le maintien de la bille de transport (1) et des billes de palier (15) dans la coquille de palier (10), et gui est pourvu à son bord périphérique d'au moins deux éléments de verrouillage (30), qui, à l'état assemblé, s'engagent chaque fois par l'intermédiaire d'un épaulement de verrouillage (35) sous une bride périphérique (13) de la coquille de palier (10) en s'y bloquant, la bride périphérique (13) de la coque de palier (10) s'appuyant là, à l'état incorporé, au bord périphérique (93) de l'ouverture de semelle (92) du panneau de voie de transport (90), et les épaulements de verrouillage (35) des éléments de verrouillage (30) s'engageant là, avec leurs extrémités libres extérieures, sous le bord périphérique (93) des ouvertures de semelle (92), en s'y bloquant.

2. Unité à bille de transport selon la revendication 1, caractérisée en ce que les éléments de verrouillage (30) comprennent chaque fois une partie élastigue formant ressort (31) en forme de "U" ouverte vers le haut, dont l'une des branches verticale (33) est liée de manière fixe à l'élément de guidage de bille (20), tandis que son autre branche verticale (34) éloignée de la bille de transport (1), peut être basculée élastiquement par rapport à la verticale et porte à distance de son extrémité libre supérieure, l'épaulement de verrouillage (35) en saillie vers l'extérieur en s'éloignant de la bille de transport (1).

3. Unité à bille de transport selon la revendication 2, caractérisée en ce que les éléments de verrouillage (30) sont formés d'un seul tenant avec l'élément de guidage de bille (20).

4. Unité à bille de transport selon l'une des revendications précédentes, caractérisée en ce qu'à l'état assemblé de l'unité à bille de transport, les éléments de verrouillage (30) font saillie vers le bas au travers d'encoches (11) dans la coquille de palier (10), et s'y engagent chaque fois avec son épaulement de verrouillage (35), sous une nervure (12) de la coquille de palier (10) formant le bord supérieur des encoches (11), chacun des épaulement de verrouillage (35) faisant là saillie vers l'extérieur en s'éloignant de la bille de transport (1), au-delà de la nervure (12), et s'engageant sous le bord périphérique (93) de l'ouverture de semelle (92) du panneau de voie de transport (90).

5. Unité à bille de transport selon l'une des revendications 2 à 4, caractérisée en ce que la branche verticale extérieure (34) des éléments de verrouillage (30) est déviable élastiquement en direction de la bille de transport (1) d'une distance telle que l'épaulement de verrouillage (35), au choix, seulement sort sous le bord périphérique (93) de l'ouverture de semelle (92), ou libère aussi la nervure (12) de la coque de palier (10).

# Fig.1

# Fig.2

# Fig.3

# Fig.4

# Fig.7

Fig.8

Fig.9

Fig.10

# Fig.11

# Fig.12

# Fig.5

# Fig.6